Europäisches Patentamt

European Patent Office

Office européen des brevets

(11) Publication number: **0 293 844 B1**

(12) **EUROPEAN PATENT SPECIFICATION**

(45) Date of publication of patent specification: **06.10.93** (51) Int. Cl.⁵: **H02M 7/529**, H02P 5/408

(21) Application number: **88108719.1**

(22) Date of filing: **31.05.88**

The file contains technical information submitted after the application was filed and not included in this specification

(54) **A control apparatus for PWM-controlled, variable voltage/variable frequency inverters.**

(30) Priority: **01.06.87 JP 134984/87**

(43) Date of publication of application:
**07.12.88 Bulletin 88/49**

(45) Publication of the grant of the patent:
**06.10.93 Bulletin 93/40**

(84) Designated Contracting States:
**CH DE FR LI**

(56) References cited:
**EP-A- 0 073 045**
**US-A- 3 611 086**

**PATENT ABSTRACTS OF JAPAN vol. 6, no. 226 (E-141)(1104) 11 November 1982, & JP-A-57 129170**

(73) Proprietor: **HITACHI, LTD.**
**6, Kanda Surugadai 4-chome**
**Chiyoda-ku, Tokyo 101(JP)**

(72) Inventor: **Horie, Akira**
**Tsukubadai APT7-206**
**663, Ichige**
**Katsuta-shi Ibaraki 312(JP)**
Inventor: **Jimbo, Yoshiji**
**16-10-11, Aoba-cho**
**Katsuta-shi Ibaraki 312(JP)**

(74) Representative: **Strehl Schübel-Hopf Groening & Partner**
**Maximilianstrasse 54**
**D-80538 München (DE)**

**Description**

BACKGROUND OF THE INVENTION

Field of the Invention

The present invention relates to an improvement of a control apparatus for a variable voltage/variable frequency inverter controlled on the pulse width modulation basis, and particularly to an improved control apparatus for an inverter for feeding an induction motor, which is controlled to produce constant torque.

Background of the Related Art

It is known to control an induction motor by means of an inverter of a variable voltage/variable frequency (VVVF) type, which is operated on a pulse width modulation (PWM) basis, so as to produce constant output torque. For the PWM control of an inverter as mentioned above, there is often adopted a so-called sinusoidal wave modulation method. In such a modulation method, control signals for semiconductor switching elements, such as transistors or gate turn-off thyristors, of an inverter are produced by comparing a sinusoidal wave modulation signal and a triangular wave carrier signal, both of which are synchronized with each other.

An AC output voltage of such an inverter is controlled by varying a modulation factor, which is a ratio of the amplitude of a modulation signal to that of a carrier signal, and its frequency is controlled by varying the frequency of the modulation signal. Further, in the following, the frequency of an AC output voltage of an inverter will be simply called an output frequency. It is to be noted here that a maximum value of a modulation factor is limited by a minimum allowable turn-off time of semiconductor switching elements used in an inverter, although it will be described in detail later.

On the other hand, for the purpose of performing the constant torque control of an induction motor, an inverter must be controlled in such a manner that a ratio of an AC output voltage V thereof to its output frequency f is maintained at a required constant value; namely, the inverter is controlled in accordance with a predetermined V/f ratio characteristics. Moreover, it is usually carried out to change a number of voltage pulses within one cycle of the AC output voltage of a PWM-controlled inverter in accordance with a predetermined range of the output frequency, in order to reduce the amplitude of a ripple component included in an output current due to the PWM control. The change of the number of voltage pulses can be achieved by varying a ratio of the frequency of a carrier signal to that of a modulation signal.

In such a PWM-controlled inverter, the AC output voltage thereof is controlled by varying a modulation factor, while maintaining a number of voltage pulses at a desired value over a predetermined range of the output frequency. The operation of an inverter under a certain number of voltage pulses is identified by the number of voltage pulses, which is called "mode". For example, the operational mode of an inverter is changed form "9 pulse mode" through "5 pulse mode" and "3 pulse mode" and, finally, to "single pulse mode" with the increase of the output frequency.

Conventionally, the change of a pulse mode is carried out in accordance with reference frequencies fixedly provided in advance. Namely, when an output frequency becomes equal to the corresponding reference frequencies, a pulse mode is changed between a 9 pulse mode and a 5 pulse mode, between a 5 pulse mode and a 3 pulse mode, or between a 3 pulse mode and a single pulse mode, respectively. It is of course that the reference frequencies as mentioned above are so selected that the amplitude of the ripple component of an output current is made as small as possible. In such a conventional control apparatus, however, there was a drawback as follows.

When a pulse mode is changed, there occurs a peak value in an output current of an inverter. If the voltage of a DC voltage source for an inverter is high, the aforesaid peak value in the output current becomes large accordingly, which may exceed the limit of the commutatable current of the semiconductor switching elements of the inverter. On the contrary, if the DC source voltage is low, the non-conductive period of the switching elements is made very small, which may be smaller than the minimum allowable turn-off time. This causes commutation failures in the inverter. For the purpose of eliminating the above mentioned drawback, there has been proposed a control apparatus as disclosed in JP-A-57/129170, in view of which the first part of claim 1 has been worded.

According to the prior art, in a PWM-controlled VVVF inverter, a present modulation factor is ascertained in every pulse mode by the calculation on the basis of the voltage of a DC voltage source for the inverter and the output frequency of the inverter, and the pulse mode is changed when it is discriminated that the ascertained modulation factor reaches its maximum value as determined on the basis of the present pulse mode and the output frequency at that time. In this manner, the prior art control apparatus can cope with the variation of the voltage of a DC voltage source for an inverter.

EP-A-0 073 045 discloses a further method of controlling an induction motor by a PWM inverter, in which the pulse mode is changed in accordance with the output frequency, and different pulse mode characteristics are obtained for different values of the DC supply voltage and of the current instruction for the induction motor.

Actually, however, there are often cases, where a PWM-controlled VVVF inverter must be controlled in accordance with different V/f ratio characteristics. In such cases, the prior art requires a new pulse mode change characteristic, which is suitable for a new V/f ratio characteristic. Therefore, the prior art control apparatus lacks flexibility and is not suited for widely varying V/f ratio characteristics.

## SUMMARY OF THE INVENTION

An object of the present invention is to provide a control apparatus for a PWM-controlled VVVF inverter, which is capable of automatically changing the pulse mode, even if a different V/f ratio characteristic is required.

This object is met by the invention defined in claim 1.

A feature of the present invention resides in that the pulse mode in the operation of a PWM-controlled inverter is changed in accordance with the output frequency of the inverter and a signal depending on an AC output voltage factor, which is defined as a ratio of the actual output AC voltage to be produced by the inverter to the maximum AC output voltage which can be derived under the actual DC voltage.

In the present invention, there is not needed any pulse mode change characteristic, which conventionally had to be provided in advance so as to fit a particular V/f ratio characteristics required. According to the present invention, by incorporating a signal representative of an AC output voltage factor into the mode change control, a pulse mode can be automatically changed to a succeeding pulse mode at a proper output frequency.

## BRIEF DESCRIPTION OF THE DRAWINGS

Fig. 1 is an explanatory drawing of a problem of a prior art control apparatus, in which there are shown the relations of an AC output voltage $V_a$ and a modulation factor $\gamma$ with respect to an output frequency f;

Fig. 2 is also an explanatory drawing of the problem of the prior art control apparatus, in which there are shown examples of a pulse mode change characteristics;

Fig. 3 is a block diagram schematically showing a control apparatus for a PWM-controlled VVVF inverter according to an embodiment of the present invention;

Fig. 3a schematically shows a configuration of an inverter-driven induction motor system, to which the present invention is applied;

Fig. 4 shows a characteristics of an AC output voltage factor calculating unit used in the control apparatus of Fig. 3;

Fig. 5 shows a characteristics of a pulse mode determining unit used in the control apparatus of Fig. 3;

Fig. 6 shows a characteristics of a modulation factor calculating unit used in the control apparatus of Fig. 3;

Figs. 7a to 7e are explanatory drawings, in which there are shown waveforms of various signals and amounts in the PWM control; and

Fig. 8 is an explanatory drawing, in which there are shown the relation of the modulation factor with respect to the output frequency and the manner of actually controlling the modulation factor in accordance with the present invention.

## DESCRIPTION OF THE PREFERRED EMBODIMENT

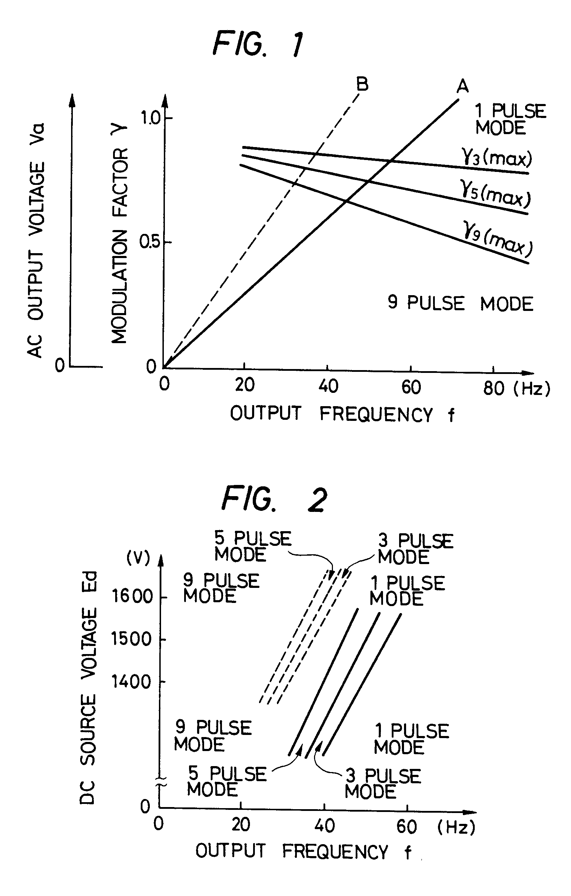

Before the description of an embodiment of the present invention, a problem of the prior art will be described further in detail, referring to Figs. 1 and 2.

Here is discussed an example, in which a pulse mode is changed from a 9 pulse mode to a single pulse mode through a 5 pulse mode and then a 3 pulse mode with the increase of an output frequency. In Fig. 1, there are shown maximum modulation factors $\gamma_9(\text{max})$, $\gamma_5(\text{max})$ and $\gamma_3(\text{max})$ in the 9, 5 and 3 pulse modes. In the region below the line $\gamma_9(\text{max})$, an inverter is operated in the 9 pulse mode. In the region between the lines $\gamma_9(\text{max})$ and $\gamma_5(\text{max})$, the inverter is operated in the 5 pulse mode, and similarly, in the region between the lines $\gamma_5(\text{max})$ and $\gamma_3(\text{max})$, it is operated in the 3 pulse mode. Finally, in the region

3

EP 0 293 844 B1

beyond the line $\gamma_3$(max), it is operated in the single pulse mode.

Further, assuming that a V/f ratio characteristics required under a certain voltage of a DC voltage source for an inverter is as shown by a solid line A, the inverter is controlled to increase the AC output voltage $V_a$ thereof along the line A with the increase of the output frequency f. In the course of this control, the pulse mode is changed at frequencies, at which the line A crosses with the respective lines $\gamma_9$(max), $\gamma_5$(max) and $\gamma_3$(max).

If the thus determined frequencies for the pulse mode change are plotted with respect to the variation of the DC source voltage $E_d$, there is obtained a mode change characteristics as shown by a group of solid lines in Fig. 2. In the figure, if the DC source voltage $E_d$ is 1500 volts, for example, the mode change is carried out at the output frequencies, at which a horizontal line indicating the voltage of 1500 volts crosses with the respective solid lines.

As described above, in the prior art control apparatus, there had to be provided the mode change characteristics, as shown in Fig. 2, which is obtained in advance on the basis of the relations, as shown in Fig. 1, of the modulation factor $\gamma$ and the AC output voltage $V_a$ with respect to the output frequency f. If, therefore, it is required to change the V/f ratio characteristics as shown by a broken line B in Fig. 1, also the mode change characteristics must be changed, as shown by a group of broken lines in Fig. 2. Such inconvenience is resulted from the fact that the mode change is carried out on the basis of the DC source voltage $E_d$, not the AC output voltage $V_a$, and the output frequency f.

Then, according to the present invention, there is introduced a concept of an AC output voltage factor $\beta$ into the mode change control. The AC output voltage factor $\beta$ means a ratio of an AC output voltage, which is required to be produced by an inverter under a certain DC source voltage, to a maximum AC output voltage, which can be derived from the inverter under the DC source voltage.

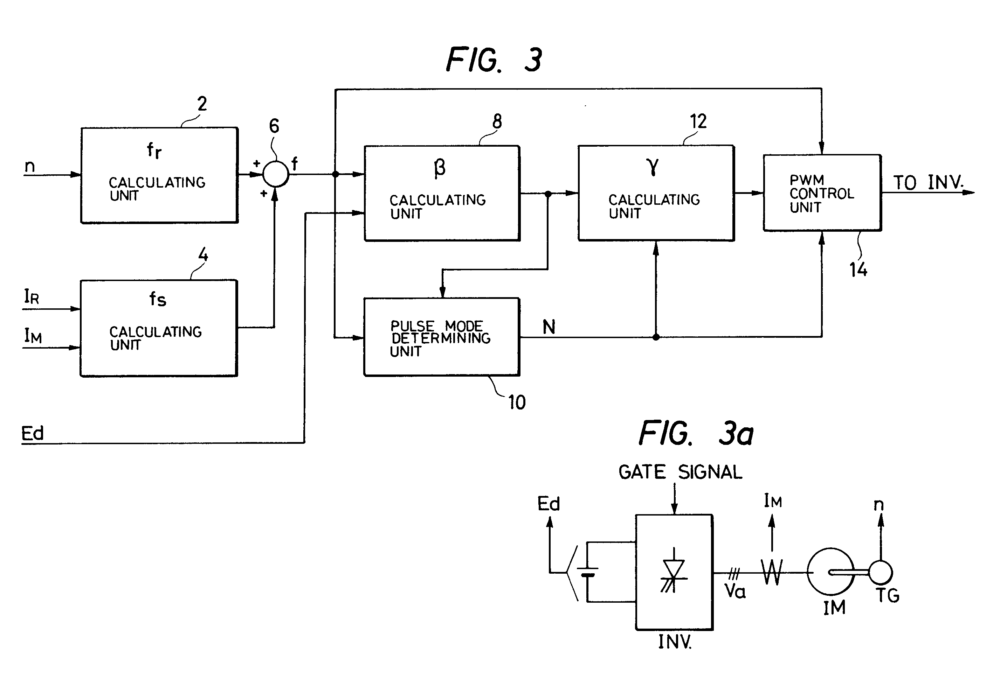

Referring now to Fig. 3, the explanation will be made of the overall configuration of a control apparatus for an inverter according to an embodiment of the present invention. Further, Fig. 3a shows an inverter-driven induction motor system, to which the present invention is applied.

First of all, there will be described the arrangement of the inverter-driven induction motor system. In Fig. 3a, a DC source voltage $E_d$ is supplied to a VVVF inverter INV, which is controlled by gate signals on the PWM basis and inverts the DC source voltage $E_d$ into an AC output voltage $V_a$. The DC source voltage $E_d$ is detected by an appropriate voltage detector, an output signal of which is coupled to a control apparatus as a DC source voltage signal $E_d$. The AC output voltage $V_a$ of the inverter is supplied for an induction motor IM, which is to be controlled to produce constant torque. A current flowing through the induction motor IM is detected by an appropriate current detector, an output signal of which is also coupled to the control apparatus as a motor current signal $I_M$, which corresponds to an output current of the inverter INV. A tachometer generator TG is coupled to the induction motor IM and produces a signal n in proportion to the rotational speed of the induction motor IM.

Referring now to Fig. 3, reference numeral 2 denotes a $f_r$ calculating unit, in which a rotational frequency $f_r$ is calculated on the basis of the rotational speed signal n. Reference numeral 4 denotes a $f_s$ calculating unit, in which a slip frequency $f_s$ of the induction motor IM is calculated on the basis of a motor current reference $I_R$ and the actual motor current $I_M$. The thus obtained rotational frequency $f_r$ and slip frequency $f_s$ are added in an adder 6, whereby a frequency f of an AC output voltage $V_a$ applied to the induction motor IM, which corresponds to the aforesaid output frequency, is obtained.

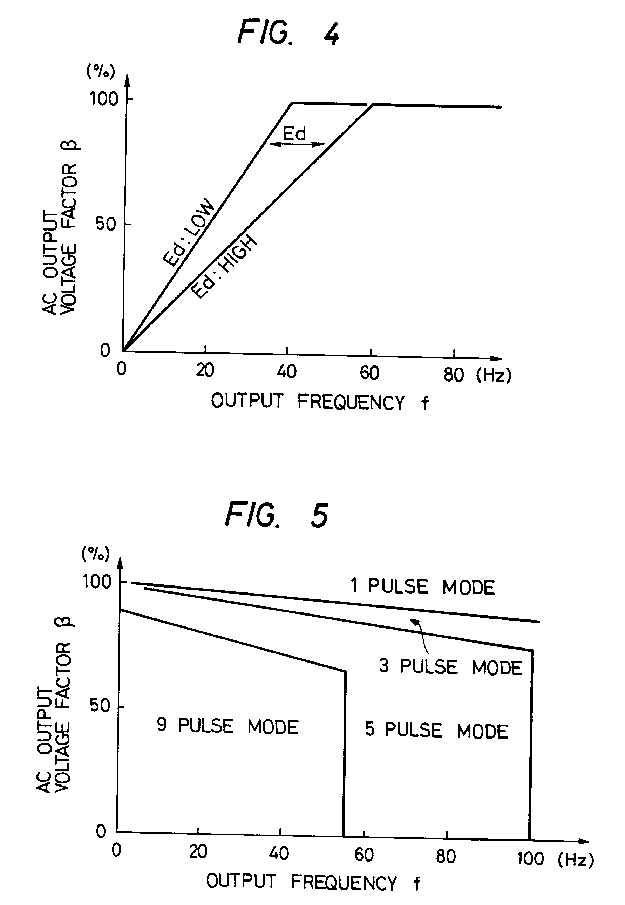

Reference numeral 8 denotes a $\beta$ calculating unit, which receives both the output frequency signal f and the detected DC voltage signal $E_d$ and produces the AC output voltage factor $\beta$. The characteristics of the $\beta$ calculating unit 8 will be described in detail later, referring to Fig. 4. Reference numeral 10 denotes a pulse mode determining unit, in which the pulse mode is determined on the basis of the AC output voltage factor $\beta$ and the output frequency signal f, and a signal N representing the determined pulse mode is produced. Also the detailed characteristics thereof will be explained later, referring to Fig. 5.

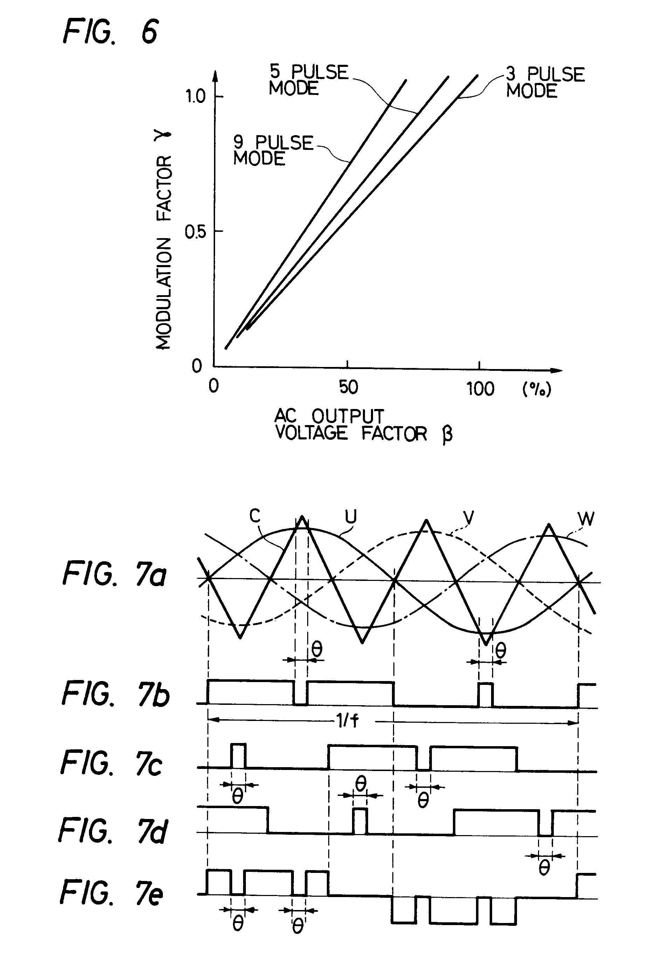

Reference numeral 12 denotes a $\gamma$ calculating unit, in which the modulation factor $\gamma$ is determined on the basis of both the AC output voltage factor $\beta$ and the pulse mode signal. The characteristics of the $\gamma$ calculating unit 12 will be described in detail later, referring to Fig. 6. The calculated modulation factor $\gamma$ is given to a PWM control unit 14, together with the output frequency signal f and the pulse mode signal N. The PWM control unit 14 produces gate signals for the inverter INV.

Although the general operation of the PWM control unit 14 is already known, it will be explained briefly in the following, referring to Figs. 7a to 7e. The PWM control unit 14 produces, at first, sinusoidal modulation signals corresponding to the respective phases of the AC output voltage of the inverter, as shown by U, V and W in Fig. 7a. The frequency and the amplitude of such modulation signals are determined by the output frequency signal f and the modulation factor $\beta$, respectively. Further, a triangular carrier signal as shown by C in Fig. 7a is produced in the PWM control unit 14, the frequency of which is

4

determined by the output frequency signal f and the pulse mode signal N. The amplitude of the carrier signal is usually fixed.

Then, the modulation signals U, V and W are compared with the carrier signal C, and the gate signals as shown in Figs. 7b to 7d are produced in accordance with the comparison result. As the result that the inverter INV is operated by the thus produced gate signals, a line voltage between phases U and V, for example, becomes as shown in Fig. 7e, which can be obtained by the exclusive-OR of a gate signal waveform for the phase U of Fig. 7b and that for the phase V of Fig. 7c.

It will be seen from those figures that there exist three pulses within one cycle of the corresponding modulation signals, or three line voltage pulses within half cycle of the AC output voltage. Therefore, an example as shown here is called the 3 pulse mode.

Referring next to Figs. 4 to 6, there will be given the explanation of the operation of the control apparatus shown in Fig. 3.

As already described, the AC output voltage factor $\beta$ is represented as a ratio of an AC output voltage $V_a$, which is required to be produced by an inverter under a certain DC source voltage $E_d$, to a maximum AC output voltage, which can be derived from the inverter under the DC source voltage $E_d$. Since the maximum AC output voltage is in proportion to the then-present DC source voltage $E_d$, the AC output voltage factor $\beta$ is represented by the following formula;

$$\beta = \frac{V_a}{k_1 \cdot E_d} \qquad (1)$$

wherein $k_1$ is a constant.

Further, since the AC output voltage $V_a$ is controlled so as to maintain its ratio $k_2$ to the output frequency f constant, the above formula (1) is rewritten as follows;

$$\beta = \frac{k_2 \cdot f}{k_1 \cdot E_d} = k_3 \cdot f \cdot \frac{1}{E_d} \qquad . \qquad (2)$$

wherein $k_3$ ($= k_2/k_1$) is a constant.

In Fig. 4, there is shown the relation represented by the above formula (2), taking the DC source voltage $E_d$ as a parameter. As will be understood from the relation shown, by selecting a large $\beta$ in the case of a low $E_d$, or by selecting a small $\beta$ in the case of a high $E_d$, a $V_a/f$ ratio can be maintained always constant, even though $E_d$ is varied. The $\beta$ calculating unit 8 is provided with the above mentioned relation, and calculates the AC output voltage factor $\beta$ on the basis of the DC source voltage $E_d$ and the output frequency f taken thereinto. The thus obtained output voltage factor $\beta$ is outputted to the pulse mode determining unit 10 and the $\gamma$ calculating unit 12.

By the way, as already described, there exists a minimum turn-off time in the semiconductor switching elements of the inverter, which corresponds to a minimum value of $\theta$ in Figs. 7a to 7e. If the non-conductive period of the switching elements becomes smaller than the minimum allowable turn-off time $\theta(min)$, the switching elements get broken. Therefore, the maximum value $\gamma(max)$ of the modulation factor in the respective output frequency f must be limited by such a minimum turn-off time $\theta(min)$, which is represented by the following formula:

$$\gamma(max) = 1 - k_4(N) \cdot \theta(min) \cdot f \qquad (3)$$

wherein $k_4(N)$ is a constant determined in accordance with the pulse mode.

Further, there is the following relation between the modulation factor $\gamma$ and the AC output voltage factor $\beta$;

$$\gamma = k_5(N) \cdot \beta \qquad (4)$$

wherein $k_5(N)$ is a constant determined in accordance with the pulse mode.

Then, if the relation of the AC output voltage factor $\beta$ and the output frequency f are plotted for every pulse mode in accordance with the formulas (3) and (4), there is obtained a characteristics as shown in Fig. 5. This characteristics is provided in the pulse mode determining unit 10. Therefore, the determining unit 10 is capable of determining the pulse mode in accordance with the characteristics of Fig. 5 on the basis of the AC output voltage factor $\beta$ and the output frequency f taken thereinto. If, for example, the AC output voltage factor $\beta$ obtained by the calculating unit 8 is 60% and the output frequency f obtained by the adder 6 is 50 Hz, the inverter should be operated in the 9 pulse mode.

Further, it is to be noted that, as shown is Fig. 5, the region of the respective pulse mode is limited with respect to the output frequency f; for example, the region of the 9 pulse mode is under about 55 Hz of the output frequency and that of the 5 pulse mode is under 100 Hz. Although the region of the 3 pulse mode is also limited under about 170 Hz, that is not shown in the figure. The frequency for the limitation as mentioned above is so determined that a product of a number of pulses in the respective pulse mode and the output frequency f is always maintained constant. The aforesaid product means a switching frequency of the switching elements of the inverter. Therefore, the fact that the product of the number of pulses and the output frequency is maintained constant is to provide the upper limit of the switching frequency of the semiconductor switching elements of the inverter, whereby there can be suppressed the increase of the switching power loss occurring in the inverter, which will increase otherwise.

The relation represented by the formula (4) is as shown in Fig. 6. There is provided the aforesaid relation in the $\gamma$ calculating unit 12, to which there are supplied the AC output voltage factor $\beta$ produced by the calculating unit 8 and the pulse mode signal N produced by the determining unit 10. In the calculating unit 12, therefore, the modulation factor $\gamma$ can be determined in accordance with the relation of Fig. 6 on the basis of the AC voltage factor $\beta$ and the pulse mode signal N.

The modulation factor $\gamma$, the pulse mode signal N and the output frequency f obtained in a manner as described above are supplied for the PWM control unit 14, in which the gate signals are produced on the basis thereof, as already described.

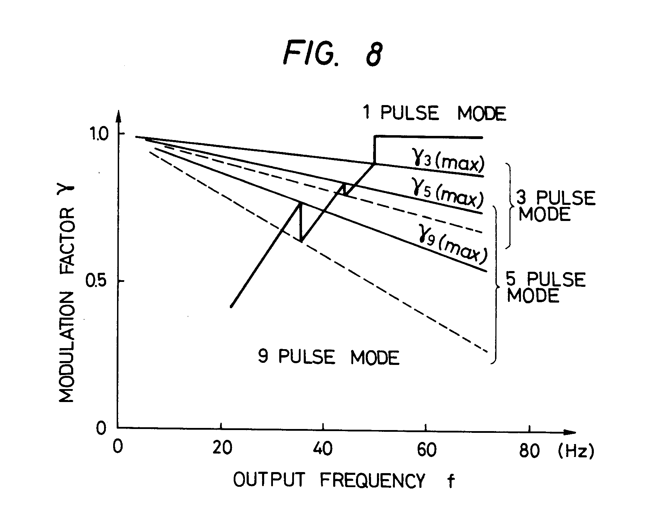

There is shown in Fig. 8 the change of the modulation factor $\gamma$ with respect to the output frequency f, when the pulse mode control according to the present invention is carried out. As seen from the figure, there are some discontinuous points in the change of the modulation factor $\gamma$. This is because there is in every pulse mode a maximum limit value $\gamma(\max)$ of the modulation factor $\gamma$, which is given by the formula (3) and the AC output voltage factor $\beta$ differs in accordance with the pulse mode, even though the modulation factor $\gamma$ is identical. Therefore, as shown in Fig. 8, the modulation factor $\gamma$ becomes necessary to be controlled in the discontinuous manner in order to keep the continuity of the change of the AC output voltage factor $\beta$.

Further, a minimum value of the modulation factor $\gamma$ in every pulse mode, which is shown by a broken line in Fig. 8, is determined as follows. A minimum value of the modulation factor $\gamma$ in the 5 pulse mode, for example, is determined so as to make the AC output voltage factor $\beta$ under the minimum modulation factor of the 5 pulse mode equal to that under the maximum modulation factor $\gamma_9(\max)$ of the 9 pulse mode. In an analogous manner, minimum modulation factors in other pulse modes can be also determined.

In the prior art control apparatus, the reference frequencies for changing the pulse mode have been fixedly provided in no consideration of the alteration of the V/f ratio characteristics, although they are adjustable against the variation of the DC source voltage. In the present invention, the alteration of the V/f ratio characteristics is managed by using the AC output voltage factor $\beta$, which is determined with the variation of the DC source voltage taken into consideration. Accordingly, reference frequencies, at which the pulse mode in the operation of the PWM-controlled inverter is changed, can be properly changed, taking account of not only the variation of the DC source voltage, but also the alteration of the V/f ratio characteristics.

In the foregoing, although the embodiment of the present invention has been described as an apparatus, which is formed by discrete devices for carrying out the respective functions, it should be understood that the present invention can be also realized by a microcomputer used for the control of this kind, which is programmed in accordance with the architecture underlying the embodiment fully disclosed above. It is obvious to an ordinally skilled person in the art to so program such a microcomputer, referring to the above mentioned disclosure of the embodiment.

Although there has herein been shown and described only one form of a control apparatus embodying the present invention, it is understood that various changes and modifications may be made therein within the scope of the appended claims.

EP 0 293 844 B1

**Claims**

**1.** A control apparatus for an inverter (INV), which is fed with a DC voltage (E$_d$) and supplies an induction motor (IM) with a variable voltage/variable frequency AC output voltage (V$_a$) produced in accordance with the PWM control, having:

detection means (2, 4, 6) for detecting the frequency (f) (output frequency) of the AC output voltage (V$_a$) of the inverter;

calculation means (8, 10, 12) for determining, dependent on the output frequency (f) and the actual DC voltage (E$_d$),a pulse mode (N) in the operation of the inverter, in which a particular number of voltage pulses is maintained within one cycle of the AC output voltage (V$_a$), and for producing a modulation factor ($\gamma$) for controlling the AC output voltage (V$_a$); and

PWM control means (14) for producing gate signals for the inverter on the basis of the modulation factor ($\gamma$) and the output frequency (f) in accordance with the pulse mode (N),

characterized in that said calculation means comprises:

an AC output voltage factor calculating unit (8) for calculating, on the basis of the output frequency (f) and the DC voltage (E$_d$), an AC output voltage factor ($\beta$), which is a ratio of the actual AC output voltage (V$_a$) to be produced by the inverter (INV) to the maximum value of the AC output voltage (V$_a$) that can be produced by the inverter (INV) under the actual DC voltage (E$_d$);

a pulse mode determining unit (10) for determining the pulse mode (N) on the basis of the output frequency (f) and the AC output voltage factor ($\beta$), and

a modulation factor calculating unit (12) for producing the modulation factor ($\gamma$), on the basis of the AC output voltage factor ($\beta$) and the pulse mode (N).

**2.** The control apparatus of claim 1, wherein the operation region of the inverter (INV) in every pulse mode is limited in such a manner that the product of the number of voltage pulses in the respective pulse mode (N) and the output frequency (f) is substantially equal to a value determined by the limitation of a switching frequency of the inverter (INV).

**Patentansprüche**

**1.** Steuereinrichtung für einen Wechselrichter (INV), der mit einer Gleichspannung (E$_d$) gespeist wird und einen Asynchronmotor (IM) mit einer Ausgangswechselspannung (V$_a$) veränderlicher Spannung und veränderlicher Frequenz abhängig von einer PWM(pulse width modulation = Pulsbreitenmodulation)-Steuerung versorgt, mit:

- einer Erfassungseinrichtung (2, 4, 6) zum Erfassen der Frequenz (f) (Ausgangsfrequenz) der Ausgangswechselspannung (V$_a$) des Wechselrichters;
- einer Berechnungseinrichtung (8, 10, 12) zum Bestimmen, abhängig von der Ausgangsfrequenz (f) und der Ist-Gleichspannung (E$_d$), eines Impulsmodus (N) für den Betrieb des Wechselrichters, in welchem Modus eine spezielle Anzahl von Spannungsimpulsen innerhalb eines Zyklus der Ausgangswechselspannung (V$_a$) beibehalten wird, und zum Erzeugen eines Modulationsfaktors ($\gamma$) zum Steuern der Ausgangswechselspannung (V$_a$); und
- einer PWM-Steuereinrichtung (14) zum Erzeugen von Torsignalen für den Wechselrichter auf Grundlage des Modulationsfaktors ($\gamma$) und der Ausgangsfrequenz (f) abhängig vom Impulsmodus (N);

   **dadurch gekennzeichnet,** daß die Berechnungseinrichtung folgendes aufweist:
- eine Ausgangswechselspannungsfaktor-Berechnungseinheit (8), um auf Grundlage der Ausgangsfrequenz (f) und der Gleichspannung (E$_d$) einen Ausgangswechselspannungsfaktor($\beta$) zu berechnen, der das Verhältnis der Ist-Ausgangswechselspannung (V$_a$), wie sie vom Wechselrichter (INV) zu erzeugen ist, zum Maximalwert der Ausgangswechselspannung (V$_a$) ist, wie sie vom Wechselrichter (INV) bei der Ist-Gleichspannung (E$_d$) erzeugt werden kann;
- eine Impulsmodus-Bestimmungseinheit (10) zum Bestimmen des Impulsmodus (N) auf Grundlage der Ausgangsfrequenz (f) und des Ausgangswechselspannungsfaktors ($\beta$); und
- eine Modulationsfaktor-Berechnungseinheit (12) zum Erstellen des Modulationsfaktors ($\gamma$) auf Grundlage des Ausgangswechselspannungsfaktors ($\beta$) und des Impulsmodus (N).

**2.** Steuereinrichtung nach Anspruch 1, bei der der Betriebsbereich des Wechselrichters (INV) in jedem Impulsmodus auf solche Weise begrenzt wird, daß das Produkt aus der Anzahl von Spannungsimpulsen in einem jeweiligen Impulsmodus (N) und der Ausgangsfrequenz (f) im wesentlichen einem Wert

7

gleich ist, wie er durch die Begrenzung der Schaltfrequenz des Wechselrichters (INV) bestimmt ist.

**Revendications**

1.  Dispositif de commande d'un onduleur (INV), qui est alimenté par une tension continue ($E_d$) et alimente un moteur à induction (IM) avec une tension de sortie alternative à tension variable/fréquence variable ($V_a$) produite en fonction de la commande par modulation de largeur d'impulsions, possédant :

    des moyens de détection (2, 4, 6) pour détecter la fréquence (f) (fréquence de sortie) de la tension de sortie alternative ($V_a$) de l'onduleur ;

    des moyens de calcul (8, 10, 12) pour déterminer, en fonction de la fréquence de sortie (f) et de la tension continue réelle ($E_d$), un mode d'impulsions (N) pour le fonctionnement de l'onduleur pour lequel un nombre particulier d'impulsions de tension est maintenu à l'intérieur d'un cycle de la tension de sortie alternative ($V_a$), et pour produire un facteur de modulation ($\gamma$) pour commander la tension de sortie alternative ($V_a$) ; et

    des moyens de commande de modulation de largeur d'impulsions (14) pour produire des signaux de déclenchement pour l'onduleur en fonction du facteur de modulation ($\gamma$) et de la fréquence de sortie (f) conformément au mode d'impulsions (N),

    caractérisé en ce que lesdits moyens de calcul comportent :

    une unité de calcul de facteur de tension de sortie alternative (8) pour calculer, en fonction de la fréquence de sortie (f) et de la tension continue ($E_d$), un facteur de tension de sortie alternative ($\beta$) qui est un rapport de la tension de sortie alternative réelle ($V_a$) devant être délivrée par l'onduleur (INV) à la valeur maximum de la tension de sortie alternative ($V_a$) qui peut être produite par l'onduleur (INV) sous la tension continue réelle ($E_d$) ;

    une unité de détermination du mode d'impulsions (10) pour déterminer le mode d'impulsions (N) en fonction de la fréquence de sortie (f) et du facteur de tension de sortie alternative ($\beta$), et

    une unité de calcul du facteur de modulation (12) pour produire le facteur de modulation ($\gamma$), en fonction du facteur de tension de sortie alternative ($\beta$) et du mode d'impulsions (N).

2.  Dispositif de commande selon la revendication 1, dans lequel la zone de fonctionnement de l'onduleur (INV) dans chaque mode d'impulsions est limitée de telle manière que le produit du nombre d'impulsions de tension dans le mode d'impulsions respectif (N) et de la fréquence de sortie (f) est sensiblement égal à une valeur déterminée par la limitation d'une fréquence de commutation de l'onduleur (INV).

FIG. 1

FIG. 2

FIG. 3

FIG. 3a

# FIG. 4

# FIG. 5

FIG. 6

FIG. 7a

FIG. 7b

FIG. 7c

FIG. 7d

FIG. 7e

FIG. 8